# EUROPÄISCHE PATENTSCHRIFT

(11) **EP 0 385 230 B1**
(45) Veröffentlichungstag und Bekanntmachung des Hinweises auf die Patenterteilung: **03.08.1994**
(21) Anmeldenummer: 90103201.1
(22) Anmeldetag: 20.02.1990
(51) Int. Cl.: G01N 30/94

(54) **Vorrichtung und Verfahren zur Sichtbarmachung von Substanzflecken auf Schichtchromatogrammen**
Device and process to render stains of substances on layer chromatograms visible
Dispositif et procédé pour rendre visible de taches de substances sur des chromatogrammes à couches

(30) Priorität: 25.02.1989 DE 3905954
(43) Veröffentlichungstag der Anmeldung: 05.09.1990
(73) Patentinhaber: LTS LOHMANN THERAPIE-SYSTEME GmbH & CO.KG, 56513 Neuwied (DE)
(72) Erfinder: Müller, Walter, Dr. Dipl.-Chem., D-5450 Neuwied 1 (DE)
(74) Vertreter: Flaccus, Rolf-Dieter, Dr.

(56) Entgegenhaltungen:
- EP-A- 0 272 562
- GB-A- 893 648
- US-A- 4 812 241
- JOURNAL OF CHROMATOGRAPHY, Band 64, Nr. 2, Februar 1972, Seiten 374-377; G. DEVRIES et al.: "Apparatus for reversed-phase chromatography on small-scale thin-layer plates"
- Ullmanns Encyklopädie der Technischen Chemie, 4. Auflage, Band 5, 1980, Verlag Chemie, Weinheim, DE; Artikel "Dünnschicht-Chromatographie"; Abschnitt 1 "Einleitung", Seite 184 - 185, Abschnitt 4 "Arbeitsmethoden", Seite 198 - 202
- Encyclopedia of Polymer Science and Engeneering, 2nd Edition, Volume 15, 1989, John Wiley & Sons, New York, Artikel "Sheeting", Seite 146 - 167

## Beschreibung

Die Erfindung betrifft eine Vorrichtung zur Sichtbarmachung nicht von Natur aus farbiger Substanzflecken eines auf einer Chromatographieplatte befindlichen Schichtchromatogrammes mittels zum Substanznachweis auf das Schichtchromatogramm applizierbarer chemischer Reagentien.

Unter Schichtchromatographie im Sinne dieser Erfindung werden dabei alle chromatographischen Methoden verstanden, bei denen die stationäre Phase eine im wesentlichen zweidimensionale Geometrie aufweist.

Bei der Schichtchromatographie handelt es sich um ein physikalisch-chemisches Trennverfahen, bei dem sich eine meist aus einem feinkörnigen Material bestehende Trennschicht (stationäre Phase) auf einem flächenförmigen Träger befindet. Dieser Träger ist üblicherweise eine Glasplatte oder eine aus Aluminium oder Polyamid bestehende Folie.
Das zu trennende Stoffgemisch wird in gelöster Form punkt- oder streifenförmig an dem einen Ende der Platte, der sogenannten Startseite aufgetragen und die Platte anschließend üblicherweise in einer speziellen dichtschließenden Kammer mit der Startseite in ein geeignetes Fließmittel (mobile Phase) gestellt. Dieses Fließmittel breitet sich durch Kapillarkräfte ausgehend von der Startseite in Richtung der anderen Plattenseite aus. Die aufgetragenen Stoffkomponenten werden dabei für eine für jeden Stoff unter den jeweiligen Bedingungen charakteristische Strecke mitgenommen. Je geringer die Affinität des Stoffes zu der stationären Phase ist, umso größer ist die Strecke auf der Platte, die er von der mobilen Phase mitgenommen wird.
Nach diesem sogenannten Entwicklungsvorgang wird die Platte getrocknet und die Flecke der einzelnen Stoffkomponenten markiert. Dies ist einfach, wenn die Stoffkomponenten eine Eigenfarbe besitzen. Da dies jedoch nur sehr selten der Fall ist, muß man durch spezielle Methoden dafür sorgen, daß die Substanzflecke in eine irgendwie gefärbte oder fluoreszierende Form überführt werden oder sich durch eine andere Art und Weise von der sonstigen Oberfläche der stationären Phase abheben.

Weitverbreitet ist die Methode der stationären Phase einen sogenannten Fluoreszenzindikator zuzusetzen. Diese Fluoreszenz wird unter Bestrahlung mit UV-Licht geeigneter Wellenlänge sichtbar. Wenn die Substanz die Eigenschaft hat, diese Fluoreszenz zu löschen, sind die Substanzflecke als dunkle Flächen vor hellem Hintergrund zu sehen.

Da jedoch bei weitem nicht alle Substanzen die Fluoreszenz des Indikators zu löschen vermögen, spielt die Überführung von Substanzflecken in gefärbte oder fluoreszierende Verbindungen eine mindestens ebenso große Rolle. Dazu wird die Chromatographieplatte nach erfolgter Entwicklung mit dem Reagenz besprüht oder in eine Lösung des Reagenzes getaucht.

Vor allem die Sprühmethode ist problematisch, da oftmals mit giftigen oder ätzenden Substanzen gearbeitet werden muß und eine Kontamination des Operateurs bzw. der Laboreinrichtung nicht ganz vermieden werden kann. Ein weiterer Nachteil ist, daß es nur schwer möglich ist, die ganze Platte gleichmäßig mit dem Reagenz zu besprühen und so die quantitative Auswertung der Chromatogramme beeinträchtigt wird. Die Tauchmethode hat den Nachteil, daß mit relativ großen Mengen an Reagenzlösung gearbeitet werden muß und nach mehrmaligem Gebrauch die Gefahr besteht, daß die Lösung an Reagenz verarmt.

Aus Ullmanns Encyklopädie der technischen Chemie, 4. Auflage, Band 5, 1980, Verlag Chemie, Weinheim, DE; Artikel "Dünnschicht-Chromatographie"; Abschnitt 1 "Einleitung", Seite 184-185, Abschnitt 4 "Arbeitsmethoden", Seite 198-202 ist bekannt, daß Kunststoff-Folien von verschiedenen Herstellern für die Dünnschicht-Chromatographie angeboten werden. Auf diesen Folienunterlagen sind Grenzschichten aufgebracht, welche zugleich Reagentien zur Detektion oder Sichtbarmachung der getrennten Verbindungen enthalten. Damit steht eine Chromatographie-Platte mit gebrauchsfertig vorgefertigten Trennschichten zur Verfügung, welche kein separates Detektionsverfahren zum Substanznachweis benötigt, weil die hierfür erforderlichen Reagentien für die qualitative und quantitative Auswertung eines Dünnschicht-Chromatogrammes bereits in der Sorptionsschicht eingearbeitet sind.
Eine Platte mit einer Dünnschicht gemischter Chemikalien, die sowohl zur Trennung der Komponenten einer zu untersuchenden Probe dienen, als auch zur Identifizierung dünnschichtchromatographisch getrennter Substanzen, ist in ihrem Anwendungsspektrum relativ eng begrenzt und steht insbesondere nicht immer für alle zu untersuchenden Stoffe zur Verfügung.

Ein anderes Dokument, Journal of Chromatogaphy, Band 64, Nr. 2, Februar 1972, Seiten 374-377; G. DE VRIES et al.: "Apparatus for reversed-phase chromatography on small-scale thin-layer plates" offenbart, daß die Identifikation, d.h. der Substanznachweis eines Schicht-Chromatogrammes üblicherweise erreicht wird durch Aufsprühen entsprechender Reagentien. Auch wird eine zusätzliche Behandlung mit beispielsweise Ammoniak- oder Essigsäure-Dampf vorgeschlagen, wobei eine Haube, ausgepolstert mit Filterpapier und imprägniert mit dem entsprechenden Reagenz, über die Objektträger darübergestülpt wird. Hierbei wird nach Auftrag der Substanznachweis-Reagentien durch ein bekanntes Sprühverfahren zusätzlich eine Dampfbehandlung mit Ammoniak oder Essigsäuredämpfen vorgenommen, ohne daß hierbei ein Kontakt des mit Ammoniak oder Essigsäure getränkten Filterpapiers mit dem Schicht-Chromatogramm stattfindet.

Trägerfolien aus einem Polyermaterial wie z.B. Polyethylen, Polypropylen, Polyamid, Polyvinylchlorid, Polyvinylacetat, Polyurethan etc. sind in der Encyclopedia of Polymer Science and Engineering, 2nd edition, volume 15, 1989, John Wiley & Sons, New York, Artikel "Sheeting", Seite 146-167 beschrieben.
Im Unterschied zu dem aus den zitierten Dokumenten Bekannten betrifft die Erfindung eine Vorrichtung zur Sichtbarmachung von Substanzflecken in Form eines Mittels zum Substanznachweis nicht von Natur aus farbiger Substanzflecken zwecks qualitativer und quantitativer Auswertung eines auf einer Chromatographie-Platte entstandenen Dünnschicht-Chromatogrammes, wobei diese erfindungsgemäße Auswertung zunächst die Lokalisierung der getrennten Substanzen auf der Schicht voraussetzt.
Hieraus ergibt sich die Aufgabe der Erfindung, welche darin besteht, eine als Stand der Technik bisher unbekannte Möglichkeit zu schaffen, nicht von Natur aus farbige Substanzflecken auf fertig entwickelten Chromatorgraphie-Platten sichtbar zu machen, die nicht mit den Nachteilen bekannter Verfahren behaftet ist, und insbesondere ohne das Versprühen von giftigen oder ätzenden Substanzen mit einer vergleichsweise geringen Menge an Reagentien auskommt, und die es gleichwohl ermöglicht, die gesamte Fläche der stationären Phase gleichmäßig mit den Detektions-Reagentien in Berührung zu bringen.

Diese Aufgabe wird erfindungsgemäß und in überraschenderweise dadurch gelöst, daß die Vorrichtung ein Laminat auf einer mindestens einschichtigen Trägerfolie und mindestens einer weiteren Schicht ist, welche die zur Sichtbarmachung der Substanzflecken erforderlichen Reagentien in gleichförmiger Verteilung enthält und auf die entwickelte und getrocknete Chromatographie-Platte auflegbar bzw. auf diese fixierbar ist.
Im Zuge der Anwendung wird die Folie mit der stationären Phase gegebenenfalls unter Anwendung von Druck und Wärme in einen flächenhaften Kontakt gebracht. Per Diffusion kann nun das Reagenz auf der weiteren Schicht der Trägerfolie in die stationäre Phase wandern und dort die charakteristische Farbreaktion bewirken, möglich ist auch der umgekehrte Fall, daß nämlich die sichtbar zu machenden Substanzen per Diffusion in die Vorrichtung gelangen und die Farbreaktion dort stattfindet. Sicherlich wird man auch Fälle finden, in denen beide Reaktionen parallel ablaufen. In einer bevorzugten Ausführung der Erfindung ist die Vorrichtung derart ausgerüstet, daß sie an der Oberfläche der stationären Phase der Chromatographie-Platte fixierbar ist.
Zu diesem Zweck besteht zumindest die Schicht, die bei Anwendung mit der Oberfläche der stationären Phase Kontakt hat, entweder aus einem Haftkleber, aus einem Heißschmelzkleber oder ist plastisch bzw. thermoplastisch. Die Vorrichtung kann in ihrer einfachsten Ausführungsform einschichtig sein.

Gemäß einer bevorzugten Ausführungsform der Erfindung ist jedoch die Folie mehrschichtig und stellt ein Laminat aus einer Trägerfolie und mindestens einer weiteren Folienschicht dar. In diesem Fall ist die Trägerfolie reagenzfrei; die Reagenzien sind in der oder den weiteren mit der Trägerfolie verbundenen Schichten enthalten.

Die erfindungsgemäße Folie ist flexibel und bevorzugt auch dehnbar und natürlich müssen zumindest die nach Anwendung auf der Chromatographieplatte verbleibenden Teile der Vorrichtung transparent sein.

Als Materialien für die reagenzhaltigen Folien bzw. Folienschichten kommen alle mit den Reagentien verträgliche folienbildende Polymere, Haftkleberformulierungen, Heißschmelzmassen, Thermoplaste und Elastomere in Betracht.
Beispielhaft seien genannt Formulierungen auf der Basis von Kautschuk, Polyisobutylen, Polyethylen, Polypropylen, Polyacrylsäurederivaten, Polyurethanen, Polyvinylacetaten und deren teilverseiften Derivaten, Polyvinylalkoholen, Polysiloxanen, Polyamiden, Blockpolymeren aus Styrol und einer anderen aliphatischen Olefinkomponente und Copolymeren des Ethylens, Vinylacetats und Acrylsäurederivaten.
Zum Schutz der reagenzhaltigen Schicht kann diese, insbesondere zur problemlosen Lagerung der Folie, mit einer Schutzfolie abgedeckt werden, die natürlich vor Benutzung entfernt werden muß. Für den Fall, daß die Folie nach ihrer Herstellung in Form einer Rolle aufgewickelt und gelagert wird, kann die nichtklebende Oberseite der Trägerfolie selbst die Funktion einer Schutzfolie übernehmen.

Ist die Folienschicht, die bei Gebrauch unmittelbar Kontakt mit der Oberfläche des Schichtchromatogramms hat, selbstklebend, muß diese Schutzfolie natürlich ablösbar gemacht werden, wie z.B. durch eine Silikonbehandlung. Andere ablösbare Schutzschichten sind z.B. aus Polytetrafluorethylen, behandeltem Papier, Cellophan u.ä.

Die Trägerfolie und die Schutzfolie können aus flexiblem oder nicht flexiblem Material bestehen und ein- oder mehrschichtig aufgebaut sein. Substanzen, die zu ihrer Herstellung verwendet werden können, sind polymere Substanzen, wie z.B., Polyethylen, Polypropylen, Polyvinylchlorid, Polyester, Polyacrylsäurederivate und Polyamid. Als weitere Materialien können auch Metallfolien, wie z.B. Aluminiumfolie, allein oder mit einem polymeren Substrat beschichtet, angewendet werden.

Das oder die Reagentien können in einer einzigen Schicht enthalten sein, möglich ist jedoch auch, daß der reagenzhaltige Teil der Folie auch mehrschichtig aufgebaut ist und in den einzelnen Schichten verschiedenartige Reagentien enthalten sind. Dies ist dann zweckmäßig, wenn Kompatibilitätsprobleme zwischen den einzelnen Reagentien bestehen oder sie nacheinander zur Wirkung kommen müssen. Sollte das letztere notwendig sein, so können auch zwei erfindungsgemäße Folien nacheinander verwendet werden. Dazu muß natürlich, falls vorhanden, die Trägerfolie der zuerst aufgebrachten Vorrichtung entfernt werden, falls sie nicht transparent und für die Reagentien der zweiten Vorrichtung durchlässig ist. Nur in diesem Fall ist es auch sinnvoll die Trägerfolie der zuerst aufgebrachten Vorrichtung zu entfernen, wenn die dann freiliegende Folienschicht selbstklebend ist.
Die Reagentien selbst können in verschiedener Form in die Folien eingearbeitet sein. So können sie z.B. molekulardispers gelöst, kristallin oder mikroverkapselt vorliegen. Bei mehreren Reagentien nebeneinander können diese auch in unterschiedlicher Form eingearbeitet sein.
Die erfindungsgemäße Vorrichtung wird in dem ebenfalls zur Erfindung gehörenden Verfahren zur Sichtbarmachung von Substanzflecken von Schichtchromatogrammen angewendet, indem sie mit der Oberfläche der stationären Phase des Schichtchromatogramms, ggf. unter Anwendung von Druck und Wärme, in Kontakt gebracht wird.
Druck und Wärme begünstigen - auch wenn die Vorrichtung selbstklebend ausgerüstet ist - den engen Kontakt zur stationären Phase und die Wärme führt in den meisten Fällen zu einer beschleunigten Farbreaktion.

Die Erfindung wird nachfolgend anhand der Figuren 1 bis 3 sowie der Beispiele erläutert:
Figur 1 stellt die einfachste Ausführungsform der Erfindung eine einschichtige, reagenzhaltige Folie dar
Figur 2 stellt eine bevorzugte mehrschichtige Folie dar
Figur 3 zeigt eine bevorzugte zweischichtige, aus Träger und klebender reagenzhaltiger Schicht aufgebaute Folie gemäß der Erfindung dar.

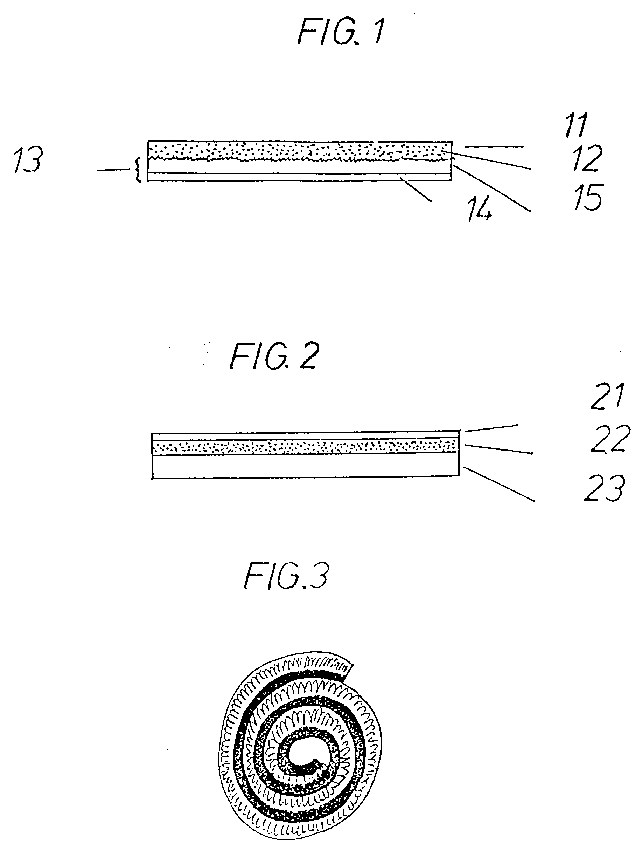

In Figur 1 enthält die thermoplastische Folie (11) die zur Sichtbarmachung der Substanzflecke notwendigen Reagentien (12) in gleichförmiger Verteilung. Die Folie wird bei Gebrauch auf die entwickelte und getrocknete Chromatographieplatte, z.B. eine Dünnschichtplatte, gelegt und der Verbund Dünnschichtplatte/Folie erhitzt. Die Dünnschichtplatte selbst besteht aus der Trägerplatte oder Trägerfolie für die stationäre Phase (14) und der stationären Phase (15) selbst. Durch Schmelzen bzw. Erweichen verbindet sich die Folie mit der stationäre Phase (15) und die in ihr enthaltenen Reagentien gelangen per Diffusion zu den Substanzflecken der stationären Phase. Wie schon zuvor erwähnt können jedoch auch die sichtbar zu machenden Substanzen in die Folie diffundieren und so auch die Farbe in der Folie gebildet werden.

Die in Figur 2 gezeigte bevorzugte Ausführungsform besteht aus einer Trägerfolie (21), der eigentlichen Reagenzfolie (22), die bevorzugt entweder plastisch, thermoplastisch oder schmelzbar ist und einer zusätzlichen Schutzfolie (23), die vor Gebrauch entfernt wird.
Wurde eine silikonisierte Trägerfolie verwendet, so wird sie nach Gebrauch entfernt und braucht deshalb nicht notwendigerweise transparent zu sein.
In einer besonders bevorzugten Ausführunng ist die reagenzhaltige und mit der stationären Phase der Chromatographieplatte in Kontakt kommende Schicht eine Heißschmelzmasse, da dann der Kontakt zur stationären Phase und den sich in ihr befindlichen sichtbarzumachenden Substanzen besonders intensiv ist. Die stationäre Phase wird dann gewissermaßen von der Reagenzschicht durchdrungen.
In Figur 3 übernimmt die Oberseite der Trägerfolie selbst die Funktion einer Schutzfolie.

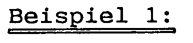

Nichtselbstklebende Vorrichtung zur Sichtbarmachung von Aminosäuren und Aminozucker
107 g Ethylen/Vinylacetat-Copolymer (20% in Dichlormethan) (Evatane 33.400, Fa. ATOCHEM)
17,2 g Paraffin (Fp. 51-53°C) (25% in Hexan)
1 g Ninhydrin oder Isatin (gelöst in möglichst wenig Methylethylketon)
werden zusammengegeben, homogenisiert und als 100 µm dicker Film auf eine silikonisierte 100 µ Polyesterfolie aufgetragen und 15 Minuten bei 50°C getrocknet. Zur Aufbewahrung wird die Reagenzschicht mit einer weiteren Polyesterfolie als Schutzfolie abgedeckt, die möglichst stärker silikonisiert ist als die Trägerfolie.
Die Vorrichtung wird wie folgt angewendet: Zum Gebrauch werden passende Stücke auf die zu konservierende DC-Platte gelegt und bei ca. 80°C (auf Heizplatte oder Trockenschrank) aufgepreßt. Nach dem Schmelzen (ca. 30 Sekunden auf einer Heizplatte) wird abgekühlt und die silikonisierte Polyesterfolie entfernt.
Die Farben der Substanzflecke werden bei ca. 80°C nach 10-20 Sekunden sichtbar.

### Beispiel 2:

Selbstklebende Vorrichtung zur Sichtbarmachung von Aminosäuren und Aminozucker
33 g Polyisobutylen (Viskosität 10 9 Pa*s, 20°C)
(z.B. Oppanol B100, Fa. BASF) 20 % in Benzin
66 g Polyisobutylen (Viskosität 25 Pa*s, 20°C)
(z.B. Oppanol B3, Fa. BASF) 20% in Benzin
0,25 g Ninhydrin in 10 ml Dichlormethan
werden zusammengegeben, homogenisiert, als 100 µ dicker Film auf eine 100 µ dicke silikonisierte Polyesterfolie ausgestrichen und 15 Minuten bei 50°C getrocknet.
Danach wird eine 10 µ dicke transparente Polyesterfolie aufkaschiert. Zum Gebrauch wird von einem passenden Stück die 100 µ silikonisierte Polyesterfolie abgezogen und die Reagenzschicht auf die entwickelte und getrocknete DC-Platte aufgeklebt. Nach kurzem Erwärmen werden die Substanzflecke in ihren charakteristischen Farben sichtbar.

### Beispiel 3:

Vorrichtung zum Nachweis von basischen Substanzen

107 g Ethylen/Vinylacetat-Copolymer
(Evatane 33.400, Fa. ATOCHEM)
43 g Paraffin (Fp.:51-53°C)
0,2 g Methylrot
werden zusammengeschmolzen und mit dieser Masse eine silikonisierte 100 µm dicke Polyesterfolie 100 µ dick beschichtet. Zum Gebrauch werden passende Stücke auf die zu konservierende DC-Platte gelegt und bei ca. 100°C (auf Heizplatte oder Trockenschrank) aufgepresst. Nach dem Schmelzen (ca. 1 min auf einer Heizplatte) wird abgekühlt und die silikonisierte Polyesterfolie entfernt. Die Substanzflecke haben eine gelbe Farbe auf tiefrotem Hintergrund.

### Beispiel 4:

Vorrichtung zur Sichtbarmachung von Schwermetallkationen
100 g Polyacrylatkleber (40%)
z.B. DUROTAK 280-2516 Fa.National Starch
1,5 g Triethanolamin
1 g Thioacetamid
werden zusammengegeben, homogenisiert, als 100 µ dicker Film auf eine silikonisierte 100 µ Polyesterfolie aufgetragen und 15 min bei 50°C getrocknet. Danach wird der Film mit einer 10 µ dicken, nichtsilikonisierten und transparenten Polyesterfolie abgedeckt. Das weitere Vorgehen entspricht Beispiel 3.

### Beispiel 5:

Vorrichtung zum Sichtbarmachen von zweiwertigen Kationen
100 g Polyacrylatkleber (40%)
z.B. Durotak 280-2516, Fa. National Starch
Polyacrylatpolymer mit basischen Gruppen, z.B.
20g Eudragit E 100, (Fa. Röhm Pharma), 40% in Essigester
0,1 g Alizarin S
werden zusammengegeben, homogenisiert, als 100 µ dicker Film auf eine silikonisierte 100 µ Polyesterfolie aufgetragen und 15 min bei 50°C getrocknet. Danach wird der Film mit einer 10 µ dicken nichtsilikonisierten und transparenten Polyesterfolie abgedeckt. Das weitere Vorgehen entspricht Beispiel 3.

## Patentansprüche

1. Vorrichtung zur Sichtbarmachung nicht von Natur aus farbiger Substanzflecken eines auf einer Chromatographieplatte befindlichen Schichtchromatogrammes mittels zum Substanznachweis auf das Schichtchromatogramm applizierbarer chemischer Reagentien, dadurch gekennzeichnet, daß sie ein Laminat aus einer mindestens einschichtigen Trägerfolie und mindestens einer weiteren Schicht ist, welche die zur Sichtbarmachung der Substanzflecken notwendigen Reagentien in gleichförmiger Verteilung enthält und auf die entwickelte und getrocknete Chromatographieplatte auflegbar bzw. auf dieser fixierbar ist.

2. Vorrichtung nach Anspruch 1, dadurch gekennzeichnet, daß das Reagenz oder die Reagentien in einer von weiteren Folienschichten enthalten und die Trägerfolie reagenzfrei ist.

3. Vorrichtung nach Anspruch 1 oder 2, dadurch gekennzeichnet, daß mindestens eine der weiteren Schichten selbstklebend ist.

4. Vorrichtung nach den Ansprüchen 1 bis 4, dadurch gekennzeichnet, daß wenigstens eine der weiteren Schichten eine Heißschmelzmasse enthält oder daraus besteht.

5. Vorrichtung nach den Ansprüchen 1 bis 4, dadurch gekennzeichnet, daß wenigstens eine der weiteren Schichten thermoplastisch ist.

6. Vorrichtung nach Anspruch 1 oder 2, dadurch gekennzeichnet, daß die Trägerfolie aus einem Polymermaterial wie z.B. Polyethylen, Polypropylen, Polyamid, Polyvinylchlorid, Polyvinylacetat, Polyurethan, Polyvinylalkohol, Polyester, Polysiloxan, Polyacrylat, Polyisobutylen, Polystryrol oder Block- bzw. Copolymere aus den genannten Polymeren zugrundeliegenden Monomeren oder aus Metall, vorzugsweise Aluminium, welches ggf. mit einem Polymer beschichtet ist, besteht.

7. Vorrichtung nach Anspruch 1 bis 4, dadurch gekennzeichnet, daß wenigstens ein Reagenz in mikroverkapselter Form vorliegt.

8. Vorrichtung nach Anspruch 1 bis 4, dadurch gekennzeichnet, daß unterschiedliche Reagentien in unterschiedlichen Schichten enthalten sind.

9. Vorrichtung nach Anspruch 1 oder 2, dadurch gekennzeichnet, daß die mit dem Schichtchromatogramm in Berührung kommende Seite mit einer mindestens einschichtigen wieder entfernbaren Schutzfolie versehen ist.

10. Vorrichtung nach Anspruch 1 oder 2, dadurch gekennzeichnet, daß die Trägerfolie entfernbar ist.

11. Verwendung der Vorrichtung zur Sichtbarmachung von Substanzflecken bei Schichtchromatogrammen nach einem der Ansprüche 1 bis 10, dadurch gekennzeichnet, daß das Laminat mit der die Reagentien enthaltenden Schicht auf das Schichtchromatogramm gelegt und der Verbund aus Schichtchromatogramm und Vorrichtung ggf. unter Anwendung von Druck und/oder Wärme hergestellt wird.

## Claims

1. Device for the visualization of substance stains which are not coloured per se on a layer chromatogram located on a chromatography plate, by means of chemical reagents which, for substance detection, are applicable to a layer chromatogram, characterized in that it is a laminate consisting of a carrier sheet having at least one layer and of at least one further layer which contains the reagents required for the visualization of substance stains in even distribution and is applicable, or fixable, respectively, to the developed and dried chromatography plate.

2. The device according to claim 1, characterized in that the reagent or the reagents are comprised in one of the further sheet layers and that the carrier sheet is free of reagent.

3. The device according to claim 1 or 2, characterized in that at least one of the further layers is self-adhesive.

4. The device according to claims 1 to 4, characterized in that at least one of the further layers comprises a hot melt plastic or consists of a hot melt plastic.

5. The device according to claims 1 to 4, characterized in that at least one of the further layers is thermoplastic.

6. The device according to claim 1 or 2, characterized in that the carrier sheet consists of a polymeric material such as, e.g., polyethylene, polypropylene, polyamide, polyvinyl chloride, polyvinyl acetate, polyurethane, polyvinyl alcohol, polyester, polysiloxane, polyacrylate, polyisobutylene, polystyrene, or blockpolymers or copolymers, respectively, of monomers on which the polymers mentioned are based, or of metal, preferably aluminium, which optionally is coated with a polymer.

7. The device according to claims 1 to 4, characterized in that at least one reagent is present in microencapsulated form.

8. The device according to claims 1 to 4, characterized in that different reagents are comprised in different layers.

9. The device according to claim 1 or 2, characterized in that the side that will contact the layer chromatogram is provided with a protective sheet consisting of at least one layer and being removable.

10. The device according to claim 1 or 2, characterized in that the carrier sheet is removable.

11. The use of the device for the visualization of substance stains in layer chromatograms according to any one of claims 1 to 10, characterized in that the laminate is applied, with the layer containing the reagents, to the layer chromatogram and that the composite of layer chromatogram and device is optionally produced applying pressure and/or heat.

## Revendications

1. Installation d'un dispositif de visualisation de taches de substances, colorées mais non de par nature, d'un chromatogramme à couche se trouvant sur une plaque de chromatographie, à l'aide de réactifs chimiques pouvant être appliqués sur le chromatogramme à couche en vue de l'identification des substances, caractérisé en ce qu'il est un lamifié d'une feuille de support ou porteuse au moins monocouche et d'au moins une autre couche supplémentaire, qui contient les réactifs nécessaires à la visualisation des taches de substances en répartition uniforme et qui peut être déposée sur ou respectivement fixée à la plaque de chromatographie développée et séchée.

2. Dispositif suivant la revendication 1, caractérisé en ce que le réactif ou les réactifs sont contenus dans l'une des autres couches de feuilles et la feuille de support est dépourvue de réactifs.

3. Dispositif suivant la revendication 1 ou 2, caractérisé en ce qu'au moins l'une des autres couches est autocollante.

4. Dispositif suivant les revendications 1 à 4, caractérisé en ce qu'au moins l'une des autres couches contient une masse thermofusible ou est composée d'une masse thermofusible.

5. Dispositif suivant les revendications 1 à 4, caractérisé en ce qu'au moins l'une des autres couches est thermoplastique.

6. Dispositif suivant la revendication 1 ou 2, caractérisé en ce que la feuille de support est constituée d'une matière polymérique, comme, par exemple, du polyéthylène, du polypropylène, du polyamide, du poly(chlorure de vinyle), du poly(acétate de vinyle), du polyuréthanne, du poly(alcool vinylique), du polyester, du polysiloxane, du polyacrylate, du polyisobutylène, du polystyrène, ou de polymères séquencés ou de copolymères des monomères qui sont à la base des polymères précités, ou d'un métal, de préférence l'aluminium, qui est éventuellement revêtu d'un polymère.

7. Dispositif suivant l'une quelconque des revendications 1 à 4, caractérisé en ce qu'au moins un réactif se présente sous forme microencapsulée.

8. Dispositif suivant les revendications 1 à 4, caractérisé en ce que divers réactifs sont contenus dans diverses couches.

9. Dispositif suivant la revendication 1 ou 2, caractérisé en ce que le côté entrant en contact avec le chromatogramme en couche est pourvu d'une feuille de protection au moins monocouche, amovible.

10. Dispositif suivant la revendication 1 ou 2, caractérisé en ce que la feuille de support peut être enlevée.

11. Utilisation du dispositif pour la visualisation de taches de substances dans des chromatogrammes en couche suivant l'une quelconque des revendications 1 à 10, caractérisé en ce que le lamifié ou stratifié est déposé avec la couche contenant les réactifs sur le chromatogramme en couche et en ce que l'on prépare le composé formé du chromatogramme et du dispositif en recourant éventuellement à l'emploi de pression et/ou de chaleur.
